# EUROPEAN PATENT SPECIFICATION

(11) **EP 0 448 177 B1**
(45) Date of publication and mention of the grant of the patent: **27.12.1995**
(21) Application number: 91200625.1
(22) Date of filing: 20.03.1991
(51) Int. Cl.: C08G 67/02

(54) **Preparation of polyketone polymers**
Herstellung von Polyketonen
Préparation de polycétones

(30) Priority: 22.03.1990 NL 9000677
(43) Date of publication of application: 25.09.1991
(73) Proprietor: SHELL INTERNATIONALE RESEARCH MAATSCHAPPIJ B.V., 2596 HR Den Haag (NL)
(72) Inventor: Geuze, Maarten Martinus, NL-1031 CM Amsterdam (NL); Petrus, Leonardus, NL-1031 CM Amsterdam (NL); Salter, James Arthur, NL-1031 CM Amsterdam (NL); De Smedt, Philip Jean Marie Maurice, NL-1031 CM Amsterdam (NL)

(56) References cited:
- EP-A- 0 305 011
- EP-A- 0 336 459
- EP-A- 0 412 620

## Description

The invention relates to a process for the preparation of polyketone polymers, i.e. polymers of carbon monoxide with one or more olefinically unsaturated compounds.

Linear polymers of carbon monoxide with one or more olefinically unsaturated compounds, in which polymers the units originating from carbon monoxide on the one hand and the units originating from the olefinically unsaturated compound(s) used on the other hand occur in a substantially alternating arrangement, can be prepared by contacting the monomers at elevated temperature and pressure, in the presence of a diluent in which the polymers are insoluble or virtually insoluble, with a suitable catalyst. The preparation of the polymers can, in principle, be carried out in either of two manners, viz. batchwise or continuously.

Batchwise preparation of the polymers is carried out by introducing catalyst into a reactor containing diluent and monomers and which is at the desired temperature and pressure. As polymerization proceeds, the pressure drops, the concentration of the polymers in the diluent increases and the viscosity of the suspension rises. Polymerization is continued until the viscosity of the suspension has reached such a high value that continuing the process further would create difficulties, e.g. in connection with heat removal. In principle, the only parameter which remains constant in batchwise polymer preparation is the temperature. A variant of batchwise polymer preparation is semi-batchwise preparation in which besides the temperature also the pressure is kept constant by adding monomers to the reactor during the polymerization.

In continuous polymer preparation, a diluent, monomers and catalyst are continuously added to a reactor containing monomers and a certain volume of the diluent and which is at the desired temperature and pressure, and a polymer suspension is continuously withdrawn from it. During the continuous polymer preparation, the temperature, the pressure and the liquid volume in the reactor are kept substantially constant. After a running-in period in which the polymer concentration in the suspension increases to the desired value, a stationary state is reached which is characterized, inter alia, by the suspension withdrawn from the reactor having a substantially constant polymer content and the polymers contained therein having constant properties.

For the preparation of the polymers on an industrial scale, a continuous process is greatly to be preferred to bachwise or semi-batchwise production for the following reasons. In the first place, the continuous process gives a higher polymer output because the production does not, as in batchwise preparation, have to be frequently interrupted for charging and discharging the reactor. Since continuous operation, in contrast with bachwise production, is characterized by all the reaction parameters remaining substantially constant, a continuous process is easier to regulate and is more suitable for automation. Finally, the continuous process produces polymers which exhibit less variation in properties and therefore have a more constant quality than those obtained from batchwise production.

One of the most important properties of the polymers in question is the bulk density. This plays an important role both in the preparation and in the treatment, storage, transport and processing of the polymers. As far as polymer preparation is concerned, the rule of thumb is that the maximum permissible suspension concentration, expressed in (kg polymer/kg suspension) x 100, is about one-tenth of the bulk density expressed in kg/m³. This means that, in the preparation of a polymer with a bulk density of 100 kg/m³, the maximum suspension concentration is about 10%, whereas in the preparation of a polymer with a bulk density of 500 kg/m³, the maximum suspension concentration is about 50%. This means that quintupling the bulk density offers the possibility of preparing about five times the quantity of polymer in the same reactor volume. As far as polymer treatment, such as filtering, washing and drying, is concerned, the quantity of adhering liquid is largely determined by the polymer bulk density. Thus it has been found, for example, that a polymer with a bulk density of 100 kg/m³ binds approx. 5 kg diluent or washing liquid per kg, whereas that quantity is only about 0.25 kg for a polymer with a bulk density of 500 kg/m³. This is naturally of great importance on account of the quantity of liquid that must be used in washing the polymers and must be removed when the polymers are dried. As far as transport and storage are concerned, the rule is that the higher the polymers' bulk density, the more attractive the flow behaviour they will have and the less space they will occupy. As far as the processing of the polymers into shaped objects is concerned, it is often the case that polymers with low bulk density cause problems in the processing apparatus. Polymers with low bulk density must often be compacted, for example by extrusion, in order to make them suitable for further processing in the equipment usual for that purpose. The higher the polymers' bulk density, the less need there will be for prior treatment of the material, which will be suitable for further processing as it is.

It will be clear from the above that for the preparation of the polymers in question, interest is primarily directed at a continuous process and further at such a process in which polymers with a high bulk density are obtained.

As stated above, in the continuous preparation of the present polymers the stationary period is preceded by a running-in period. In contrast with the stationary period, during the running-in period both the polymer content of the suspension and the bulk density of the prepared polymers increase.

The applicant has carried out extensive research into the conditions which should be applied during the running-in period with a view to achieving the highest possible suspension concentration during the stationary period, as well as the highest possible bulk density of the polymers prepared during the stationary period. Initially, the route followed in an attempt to achieve this goal was to add to a reactor which contained monomers and diluent and was at the temperature and pressure selected for the stationary period, the feed streams (monomers, catalyst and diluent), where the catalyst and diluent feed rates had values corresponding with those chosen for the stationary period (k and v respectively). The results of this running-in procedure were quite disappointing. Although after a relatively long running-in period a stationary state could be reached, characterized by a constant polymer content of the suspension discharged from the reactor, and a constant bulk density of the polymers present therein, both the suspension concentration and the bulk density were low. Attempts to improve the situation by application of a considerably higher catalyst rate than that previously used remained unsuccessful. Although a higher suspension concentration could be achieved in this way, the bulk density of the prepared polymers was very low. Moreover, the experiments conducted in this way had to be broken off at an early stage at a moment that the stationary state had not yet been reached in connection with extremely high viscosity of the suspension, so that stirring was no longer possible.

In the course of continued research into this subject, a running-in procedure has been found that leads to a stationary state which is characterized both by a high suspension concentration and a high bulk density of the prepared polymers. The running-in procedure is carried out by adding the feed streams to a reactor containing monomers and diluent and which is at the temperature and pressure chosen for the stationary period. If during the stationary period the catalyst addition rate has a value k and the diluent addition rate has a value v, a catalyst addition rate should be employed at the start of the running-in period which is smaller than k and/or a diluent addition rate which is greater than v and the catalyst addition rate should be increased and the diluent addition rate should be reduced during the running-in period such that at the end of the running-in period they have the values k and v respectively.

The present patent application therefore relates to a process for the preparation of polyketone polymers,
a) wherein linear polymers of carbon monoxide with one or more olefinically unsaturated compounds, in which polymers the units originating from carbon monoxide and the units originating from the olefinically unsaturated compound(s) occur in a substantially alternating order, are prepared by contacting the monomers at elevated temperature and pressure with a suitable catalyst,
b) wherein the preparation is carried out continuously and during the stationary period the catalyst addition rate has a value k and the diluent addition rate has a value v,
c) wherein the running-in procedure is carried out by adding the feed streams to a reactor containing monomers and diluent and which is at the temperature and pressure chosen for the stationary period, and
d) wherein at the beginning of the running-in period a catalyst addition rate is used which is lower than k and/or a diluent addition rate which is higher than v, and
e) wherein during the running-in period the catalyst addition rate is raised and/or the diluent addition rate is reduced, this being done such that at the end of the running-in period they have substantially the values k and v respectively.

In the process of the invention, k and v are preferably chosen such that during the stationary period the suspension concentration is at least 12.5% and the average residence time of the suspension in the reactor is 2-30 hours. According to the invention, both the catalyst addition rate and the diluent addition rate can be changed during the running-in period. Preferably, these changes are carried out stepwise. There is further preference for changing only one of the addition rates during the running-in period, in particular only the catalyst addition rate. During the execution of the running-in procedure with the application of a stepwise raising of the catalyst addition rate, a catalyst addition rate is preferably chosen at the beginning of the running-in period that amounts to 15-25% of the final value of k. Preferably, the catalyst addition rate is raised during each stepwise change by an amount corresponding to 15 to 35% of the final value of k. The time interval between the successive increases of the catalyst addition rate preferably corresponds to 1-3 times the average residence time of the suspension in the reactor.

In the process of the invention, a catalyst is used which is capable of, starting from a mixture of carbon monoxide and one or more olefinically unsaturated compounds, catalyzing the formation of the linear alternating polymers mentioned hereinbefore. Catalysts that are suitable for the present purpose are, inter alia, those which include a Group VIII metal. In this patent application, Group VIII metals are understood to be the noble metals ruthenium, rhodium, palladium, osmium, iridium and platinum, as well as the iron group metals iron, cobalt and nickel. Preference is given to catalysts which include palladium, nickel or cobalt as Group VIII metal. Special preference is given to palladium as the Group VIII metal. If the catalysts that are used in the process of the invention comprise a Group VIII metal, they are incorporated in the catalyst preferably in the form of a salt of a carboxylic acid, in particular in the form of an acetate. In addition to a Group VIII metal, the catalysts preferably include a dentate ligand in which at least two dentate groups occur, selected from phosphorus-containing, nitrogen-containing and sulphur-containing dentate groups, whereby the dentate ligand can complex with the Group VIII metal. Although dentate ligands containing more than two dentate groups are also eligible for this purpose, such as the tetradentate ligand 1,8-bis[bis(2-methoxyphenyl)phosphino]-2,7-bis[bis(2-methoxyphenyl)phosphinomethyl]octane, bidentate ligands are preferred. When a nitrogen bidentate ligand is used, preference is given to compounds of the general formula 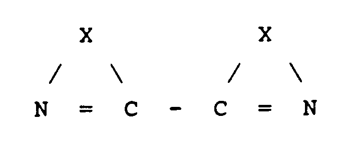
wherein X
represents an organic bridging group containing three or four atoms in the bridge, at least two of which are carbon atoms, such as 2,2'-bipyridine and 1,10-phenanthroline. When use is made of a sulphur bidentate ligand, it is preferred to use compounds of the general formula R¹S-R-SR¹, wherein R¹ represents an optionally polar-substituted hydrocarbon group and R is a bivalent organic bridging group which has at least two carbon atoms in the bridge, such as 1,2-bis(ethylthio)ethane and cis-1,2-bis(benzylthio)ethene. Preference is given to the use of phosphorus bidentate ligands of the general formula (R¹)₂P-R-P(R¹)₂, wherein R and R¹ have the meanings given hereinbefore. Further it is preferred to use such phosphorus bidentate ligands in which R¹ represents an aromatic hydrocarbon group having at least one alkoxy substituent in the ortho position relative to the phosphorus atom to which it is bound. A compound which is very suitable for the present purpose is 1,3-bis[bis(2-methoxyphenyl)phosphino]propane. If a nitrogen or sulphur bidentate ligand is used in the catalysts, the applied quantity is preferably 0.5-100 and in particular 1-50 mol per mol of Group VIII metal. When a phosphorus bidentate ligand is used, the applied quantity is preferably 0.5-2 and in particular 0.75-1.5 mol per mol of Group VIII metal. In addition to a Group VIII metal and a dentate ligand, the catalysts preferably include an anion of an acid with a pKa of less than 4 and in particular an anion of an acid with a pKa of less than 2. The anion can be introduced into the catalyst either in the form of a compound from which the desired anion splits off or in the form of a mixture of compounds from which the desired anion is formed by interaction. Both mineral acids and organic acids are eligible as acids with a pka of less than 4. Examples of suitable mineral acids are sulphuric acid and perchloric acid. Examples of suitable organic acids are sulphonic acids such as para-toluenesulphonic acid and halogen carboxylic acids such as trifluoroacetic acid. The anion can be incorporated in the catalyst in the form of a carboxylic acid or in the form of a derivative thereof such as an alkyl or aryl ester, an amide, an imide, an anhydride, an ortho-ester, a lactone, a lactam or an alkylidene dicarboxylate. The anion is preferably present in the catalysts in a quantity of 1-100 and in particular 2-50 mol per mol of Group VIII metal. Besides its application as a separate component, the anion of an acid with a pKa of less than 4 can also be present in the catalyst because, for example, palladium trifluoroacetate or palladium para-tosylate was used as Group VIII metal compound. In order to increase the activity of the Group VIII metal-containing catalysts, a 1,4-quinone may be additionally incorporated therein. For that purpose, 1,4-benzoquinone and 1,4-naphthoquinone are very suitable. The quantity of 1,4-quinone used preferably amounts to 5-5,000 and in particular 10-1,000 mol per mol Group VIII metal.

Olefinically unsaturated compounds that can be polymerized with carbon monoxide by using the process of the invention can be compounds consisting exclusively of carbon and hydrogen as well as compounds which contain, in addition to carbon and hydrogen, one or more hetero-atoms. The process of the invention is preferably applied for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process of the invention is in particular very suitable for application in the preparation of copolymers of carbon monoxide with ethene and for the preparation of terpolymers of carbon monoxide with ethene and an α-olefin, in particular propene.

The quantity of catalyst composition employed in the process of the invention may vary within wide limits. Preferably, a quantity of catalyst composition is used which comprises 10⁻⁷-10⁻³ and in particular 10⁻⁶-10⁻⁴ mol of Group VIII metal per mol of olefinically unsaturated compound to be polymerized.

The contacting of the monomers with the catalyst is, in the process of the invention, carried out in the presence of a diluent in which the polymers are insoluble or virtually insoluble. Very suitable for this purpose are lower aliphatic alcohols and in particular methanol.

The process of the invention is preferably carried out in two or more reactors connected in series. If reactors connected in series are used, preferably not more than three reactors are used.

The process of the invention is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide is preferably 10:1-1:10 and in particular 5:1-1:5.

The invention will now be illustrated with the aid of four experiments showing the continuous preparation of carbon monoxide/ethene copolymers and carbon monoxide/ethene/propene terpolymers. The experiments were carried out in a reactor with a capacity of 150 l. The catalyst components were distributed over two solutions:

Solution 1 contained 1000 mg palladium acetate per litre acetone, 2491 mg 1,3-bis[bis(2-methoxyphenyl)phosphino]propane and 1067 mg trifluoroacetic acid.

Solution 2 contained 3000 mg trifluoroacetic acid per litre acetone.

Unless stated otherwise, the suspension mass in the reactor was 70 kg.

### Example 1 (Comparative)

Starting up in a reactor which contained monomers and diluent, wherein the feed rates chosen for the stationary period had been set from the start.

66.5 kg methanol was introduced into the reactor.

| | |
|---|---|
| Reactor pressure: | 45 bar |
| Reactor temperature: | 83°C |
| Gas phase composition: | 30 mol % carbon monoxide |
| | 70 mol % ethene |

At run-hour zero the following addition rates were set.

| | |
|---|---|
| Methanol: | 3.5 kg/hour |
| Solution 1: | 2.1 ml/hour |
| Solution 2: | 1.4 ml/hour |

At run-hour 40 the polymer content of the suspension removed from the reactor was 4% and the bulk density of the prepared carbon monoxide/ethene copolymers was 70 kg/m³. At run-hour 50 and at run-hour 70 the same values were found for both the suspension concentration and the bulk density.

### Example 2 (Comparative)

Starting up in a reactor which contained monomers and diluent, wherein the feed rates chosen for the stationary period had been set from the start.

66.5 kg methanol was introduced into the reactor.

| | |
|---|---|
| Reactor pressure: | 45 bar |
| Reactor temperature: | 83°C |
| Gas phase composition: | 30 mol % carbon monoxide |
| | 70 mol % ethene |

At run-hour zero the following addition rates were set:

| | |
|---|---|
| Methanol: | 3.5 kg/hour |
| Solution 1: | 11 ml/hour |
| Solution 2: | 7.5 ml/hour |

At run-hour 18 the polymer content of the suspension removed from the reactor was 8% and the bulk density of the prepared carbon monoxide/ethene copolymers was less than 50 kg/m³. Due to the very high viscosity of the suspension, stirring was no longer possible and the experiment had to be broken off prematurely.

### Example 3

Starting up in a reactor which contained monomers and diluent and in which the catalyst feed rate was raised stepwise to the value chosen for the stationary period.

6l kg methanol was introduced into the reactor.

| | |
|---|---|
| Reactor pressure: | 45 bar |
| Reactor temperature: | 78°C |
| Gas phase composition: | 25 mol % carbon monoxide |
| | 55 mol % ethene |
| | 20 mol % propene |

At run-hour zero the following addition rates were set:

| | |
|---|---|
| Methanol: | 5 kg/hour |
| Solution 1: | 6.33 ml/hour |
| Solution 2: | 4.18 ml/hour |

At run-hour 48 the polymer content of the suspension which was removed from the reactor was 4.8% and the bulk density of the prepared carbon monoxide/ethene/ propene terpolymers was 80 kg/m³.

At run-hour 52 the feed rates of solutions 1 and 2 were increased to 12.66 ml/hour for solution 1 and 8.36 ml/hour for solution 2.

At run-hour 92 the suspension concentration was 8.7% and the bulk density was 120 kg/m³. At run-hour 96 the feed rates of solutions 1 and 2 were increased to 19.0 ml/hour for solution 1 and 12.54 ml/hour for solution 2.

At run-hour 137 the suspension concentration was 12.3% and the bulk density was 160 kg/m³. At run-hour 141 the feed rates of solutions 1 and 2 were increased to 25.32 ml/hour for solution 1 and 12.72 ml/hour for solution 2.

At run-hour 188 the suspension concentration was 15% and the bulk density was 200 kg/m³. At run-hour 192 the feed rates of solutions 1 and 2 were increased to 31.65 ml/hour for solution 1 and 20.90 ml/hour for solution 2.

At run-hour 240 the suspension concentration was 17.9% and the bulk density was 260 kg/m³. At run-hour 285 the same values were found for both the suspension concentration and the bulk density.

### Example 4

Starting up in a reactor which contained monomers and diluent and in which the diluent feed rate was reduced stepwise to the value chosen for the stationary period.

60 kg methanol was introduced into the reactor.

| | |
|---|---|
| Reactor pressure: | 45 bar |
| Reactor temperature: | 80°C |
| Gas phase composition: | 30 mol % carbon monoxide |
| | 45 mol % ethene |
| | 25 mol % propene |

At run-hour zero the following addition rates were set:

| | |
|---|---|
| Methanol: | 11.4 kg/hour |
| Solution 1: | 59 ml/hour |
| Solution 2: | 40 ml/hour |

At run-hour 90 the polymer concentration of the suspension which was discharged from the reactor was 6% and the bulk density of the prepared carbon monoxide/ ethene/propene terpolymers was 100 kg/m³. At run-hour 94 the feed rate of methanol was reduced to 8.7 kg/hour.

At run-hour 138 the suspension concentration was 9% and the bulk density was 150 kg/m³. At run-hour 142 the feed rate of methanol was reduced to 6.7 kg/hour.

At run-hour 200 the suspension concentration was 14% and the bulk density was 200 kg/m³. At run-hour 240 the same values were found for both the suspension concentration and the bulk density.

Of examples 1-4, examples 3 and 4 are according to the invention. In these examples carbon monoxide/ethene/propene terpolymers were prepared in a continuous manner using a starting-up procedure in which either the catalyst addition rate was raised (example 3) or the diluent addition rate was reduced (example 4) to the values chosen for the stationary period. In this way, polymers could be prepared during the stationary period of the continuous process at suspension concentrations of 14 and 17.9%, the polymers having bulk densities of 200 and 260 kg/m³ respectively.

Examples 1 and 2 fall outside the scope of the invention and are only included in the patent application for comparison. In example 1 carbon monoxide/ethene copolymers were prepared in a continuous manner using a starting-up procedure in which both the catalyst addition rate and the diluent addition rate corresponded with the values chosen for the stationary period. In this way, polymers with a bulk density of only 70 kg/m³ could be prepared during the stationary period of the continuous process at a suspension concentration of just 4%.

In example 2 an attempt was made to improve the results of example 1 by using a considerably higher catalyst addition rate. The experiment described in this example had, however, to be broken off in connection with the extremely high viscosity of the suspension before the stationary state was reached.

It was established by ¹³C-NMR analysis that the carbon monoxide/ethene copolymers prepared according to examples 1 and 2 and the carbon monoxide/ethene/propene terpolymers prepared according to examples 3 and 4 consisted of linear chains in which on the one hand the units from carbon monoxide and on the other hand the units from ethene or ethene and propene occured in an alternating arrangement. In the terpolymer chains the units from ethene and propene occured in a randomly distributed manner.

## Claims

1. Process for the preparation of polyketone polymers, characterized in that
a) linear polymers of carbon monoxide with one or more olefinically unsaturated compounds, in which polymers the units originating from carbon monoxide and the units originating from the olefinically unsaturated compound(s) occur in a substantially alternating order, are prepared by contacting the monomers at elevated temperature and pressure, in the presence of a diluent in which the polymers are insoluble or virtually insoluble, with a suitable catalyst,
b) wherein the preparation is carried out continuously and during the stationary period the catalyst addition rate has a value k and the diluent addition rate has a value v,
c) wherein the running-in procedure is carried out by adding the feed streams to a reactor containing monomers and diluent and which is at the temperature and pressure chosen for the stationary period, and
d) wherein at the beginning of the running-in period a catalyst addition rate is used which is lower than k and/or a diluent addition rate which is higher than v, and
e) wherein during the running-in period the catalyst addition rate is raised and/or the diluent addition rate is reduced, this being done such that at the end of the running-in period they have substantially the values k and v respectively.

2. Process according to claim 1, characterized in that k and v are chosen such that the suspension concentration during the stationary period is at least 12.5% and the average residence time of the suspension in the reactor is 2-30 hour.

3. Process according to claim 1 or 2, characterized in that the raising of the catalyst addition rate and/or the reduction of the diluent addition rate is carried out stepwise.

4. Process according to any of claims 1-3, characterized in that during the running-in period only the catalyst addition rate is changed, while the diluent addition rate is kept constant at the value v.

5. Process according to claim 4, characterized in that in the execution of the running-in procedure using a stepwise raising of the catalyst addition rate, at the beginning of the running-in period a catalyst addition rate is chosen which is 15-25% of the final value k.

6. Process according to claim 5, characterized in that at each stepwise change the catalyst addition rate is raised by an amount corresponding to 15 to 35% of the final value of k.

7. Process according to claim 5 or 6, characterized in that the time between the successive rises of the catalyst addition rate correspond with 1-3 times the average residence time of the suspension in the reactor.

8. Process according to any of claims 1-7, characterized in that the catalyst contains a Group VIII metal, and a dentate ligand in which at least two dentate groups occur, chosen from phosphorus-, nitrogen- and sulphur-containing dentate groups, whereby the dentate ligand can complex with the Group VIII metal.

9. Process according to claim 8, characterized in that the catalyst also contains an anion of an acid with a pKa of less than 4.

10. Process according to any of claims 1-9, characterized in that as diluent a lower aliphatic alcohol is used, such as methanol.

## Patentansprüche

1. Verfahren zur Herstellung von Polyketonen, dadurch gekennzeichnet, daß
a) man durch Kontaktieren der Monomere bei erhöhter Temperatur und erhöhtem Druck in Gegenwart eines Verdünnungsmittels, in dem die Polymere unlöslich oder praktisch unlöslich sind, mit einem geeigneten Katalysator lineare Polymere aus Kohlenmonoxid und einer oder mehreren olefinisch ungesättigten Verbindungen herstellt, wobei in den Polymeren die vom Kohlenmonoxid stammenden Einheiten und die von der/den olefinisch ungesättigten Verbindung(en) stammenden Einheiten in einer weitgehend alternierenden Reihenfolge vorkommen,
b) wobei man die Herstellung kontinuierlich durchführt und die Katalysatorzusatzrate während der stationären Phase einen Wert k und die Verdünnungsmittelzusatzrate einen Wert v hat,
c) wobei man bei der Einlaufphase so verfährt, daß man die Einspeisematerialien einem Reaktor zusetzt, der Monomere und Verdünnungsmittel enthält und der sich bei der/dem für die stationäre Phase gewählten Temperatur und Druck befindet, und
d) wobei man zu Beginn der Einlaufphase eine Katalysatorzusatzrate, die niedriger als k ist und/oder eine Verdünnungsmittelzusatzrate, die höher als v ist, verwendet und
e) wobei man während der Einlaufphase die Katalysatorzusatzrate erhöht und/oder die Verdünnungsmittelzusatzrate verringert, wobei man dieses so ausführt, daß sie am Ende der Einlaufphase im wesentlichen jeweils den Wert k und v haben.

2. Verfahren nach Anspruch 1, dadurch gekennzeichnet, daß man k und v so auswählt, daß die Suspensionskonzentration während der stationären Phase mindestens 12,5% und die mittlere Verweilzeit der Suspension im Reaktor 2-30 Stunde beträgt.

3. Verfahren nach Anspruch 1 oder 2, dadurch gekennzeichnet, daß man die Erhöhung der Katalysatorzusatzrate und/oder die Verringerung der Verdünnungsmittelzusatzrate schrittweise ausführt.

4. Verfahren nach einem der Ansprüche 1-3, dadurch gekennzeichnet, daß man während der Einlaufphase nur die Katalysatorzusatzrate verändert, während man die Verdünnungsmittelzusatzrate konstant bei dem Wert v hält.

5. Verfahren nach Anspruch 4, dadurch gekennzeichnet, daß man bei der Ausführung des Anfahrens unter Anwendung einer schrittweisen Erhöhung der Katalysatorzusatzrate so vorgeht, daß man zu Beginn der Einlaufphase eine Katalysatorzusatzrate wählt, die 15-25% des endgültigen Wertes k beträgt.

6. Verfahren nach Anspruch 5, dadurch gekennzeichnet, daß man die Katalysatorzusatzrate bei jeder schrittweisen Veränderung um eine 15 bis 35% des endgültigen Wertes für k entsprechende Menge erhöht.

7. Verfahren nach Anspruch 5 oder 6, dadurch gekennzeichnet, daß die Zeit zwischen aufeinanderfolgenden Erhöhungen der Katalysatorzusatzrate bis zu dreimal so lang ist wie die mittlere Verweilzeit der Suspension im Reaktor.

8. Verfahren nach einem der Ansprüche 1-7, dadurch gekennzeichnet, daß der Katalysator ein Metall der Gruppe VIII und einen zähnigen Liganden enthält, in dem mindestens zwei zähnige, aus phosphor-, stickstoff- und schwefelhaltigen zähnigen Gruppen ausgewählte Gruppen vorliegen, wodurch der zähnige Ligand mit dem Metall der Gruppe VIII einen Komplex bilden kann.

9. Verfahren nach Anspruch 8, dadurch gekennzeichnet, daß der Katalysator auch ein Anion einer Säure mit einem pKₛ-Wert kleiner 4 enthält.

10. Verfahren nach einem der Ansprüche 1-9, dadurch gekennzeichnet, daß man als Verdünnungsmittel einen niederen aliphatischen Alkohol wie z.B. Methanol einsetzt.

## Revendications

1. Procédé de préparation de polymères polycétoniques caractérisé en ce que
a) on prépare des polymères linéaires du monoxyde de carbone avec un ou plusieurs composés à insaturation oléfinique, polymères dans lesquels les unités tirant leur origine du monoxyde de carbone et les unités tirant leur origine du ou des composés à insaturation oléfinique se présentent en un ordre essentiellement alternant, par la mise en contact des monomères avec un catalyseur approprié à température et pression élevées en présence d'un diluant dans lequel les polymères sont insolubles ou quasi insolubles,
b) on entreprend la préparation de manière continue et, au cours de la période stationnaire, la vitesse d'addition du catalyseur possède une valeur k et la vitesse d'addition du diluant possède une valeur v,
c) on entreprend le processus de démarrage par l'introduction des courants de charge ou d'alimentation dans un réacteur contenant des monomères et du diluant et qui se trouve à la température et à la pression choisies pour la période stationnaire et
d) au début de la période de démarrage, on utilise une vitesse d'addition de catalyseur qui est plus faible que k et/ou une vitesse d'addition du diluant qui est plus élevée que v et
e) au cours de la période démarrage, on augmente la vitesse d'addition du catalyseur et/ou on réduit la vitesse d'addition du diluant, ces opérations s'effectuant en une manière telle que, à la fin de la période de démarrage, la vitesse d'addition du catalyseur et la vitesse d'addition du diluant possèdent sensiblement les valeurs k et v respectivement.

2. Procédé suivant la revendication 1, caractérisé en ce que l'on choisit k et v en une manière telle que la concentration de la suspension, au cours de la période stationnaire, soit d'au moins 12,5% et la durée de séjour moyenne de la suspension dans le réacteur soit de 2 à 30 heures.

3. Procédé suivant l'une quelconque des revendications 1 et 2, caractérisé en ce que l'on entreprend l'élévation de la vitesse d'addition du catalyseur et/ou la réduction de la vitesse d'addition du diluant de manière échelonnée.

4. Procédé suivant l'une quelconque des revendications 1 à 3, caractérisé en ce que, au cours de la période de démarrage, on modifie uniquement la vitesse d'addition du catalyseur, cependant que l'on maintient la vitesse d'addition du diluant constante à la valeur v.

5. Procédé suivant la revendication 4, caractérisé en ce que, au cours de la réalisation du processus de démarrage en utilisant une élévation échelonnée de la vitesse d'addition du catalyseur, on choisit, au début de la période de démarrage, une vitesse d'addition du catalyseur qui est de 15 à 25% de la valeur k finale.

6. Procédé suivant la revendication 5, caractérisé en ce que, à chaque modification échelonnée, on augmente la vitesse d'addition du catalyseur d'une proportion correspondant à 15 à 35% de la valeur finale de k.

7. Procédé suivant l'une quelconque des revendications 5 et 6, caractérisé en ce que le temps qui s' écoule entre deux élévations successives de la vitesse d'addition du catalyseur, correspond à une à trois fois la durée de séjour moyenne de la suspension dans le réacteur.

8. Procédé suivant l'une quelconque des revendications 1 à 7, caractérisé en ce que le catalyseur contient un métal du groupe VIII et un ligand denté dans lequel au moins deux groupes dentés sont présents, choisis parmi les groupes dentés contenant du phosphore, de l'azote et du soufre, où le ligand denté peut complexer le métal du groupe VIII.

9. Procédé suivant la revendication 8, caractérisé en ce que le catalyseur contient aussi un anion d'un acide qui possède un pKA inférieur à 4.

10. Procédé suivant l'une quelconque des revendications 1 à 9, caractérisé en ce que l'on utilise, à titre de diluant, un alcool aliphatique inférieur comme le méthanol.
